# EUROPEAN PATENT SPECIFICATION

(11) **EP 1 479 144 B1**
(45) Date of publication and mention of the grant of the patent: **29.06.2016**
(21) Application number: 03743220.0
(22) Date of filing: 25.02.2003
(51) Int. Cl.: H02B 1/00, G06F 1/00

(54) **METHOD AND SYSTEM FOR EXTERNAL CLOCK TO OBTAIN MULTIPLE SYNCHRONIZED REDUNDANT COMPUTERS**
VERFAHREN UND SYSTEM FÜR EXTERNEN TAKT ZUM ERHALTEN MEHRERER SYNCHRONISIERTER REDUNDANTER COMPUTER
PROCEDE ET SYSTEME DESTINES A UNE HORLOGE EXTERNE POUR L'OBTENTION DE PLUSIEURS ORDINATEURS REDONDANTS SYNCHRONISES

(30) Priority: 25.02.2002 US 359544 P; 06.01.2003 US 438159 P
(43) Date of publication of application: 24.11.2004
(73) Proprietor: GENERAL ELECTRIC COMPANY, Plainville CT 06062 (US)
(72) Inventor: BERKCAN, Ertugrul, Clifton Park, NY 12065 (US); PEARLMAN, Marc, Robert, Clifton Park, NY 12065 (US); ANDARAWIS, Emad, Andarawis, Clifton Park, NY 12065 (US); MANI, Shobhana, Clifton Park, NY 12065 (US); TOPKA, Terry, Michael, Scotia, NY 12302 (US); ORLOWSKI, Eugene, Joseph, Jr., Scotia, NY 12302 (US)
(74) Representative: Illingworth-Law, William Illingworth
(86) International application number: PCT/US2003/005600
(87) International publication number: WO 2003/073571

(56) References cited:
- EP-A2- 0 613 271
- EP-A2- 1 179 764
- US-A- 4 707 142
- US-A- 5 041 798
- US-A- 5 451 879
- US-A- 5 768 148
- US-B1- 6 194 969
- US-B1- 6 291 911
- SERIZAWA Y ET AL: "Wide-Area Current Differential Backup Protection Employing Broadband Communications and Time Transfer Systems" IEEE TRANSACTIONS ON POWER DELIVERY, IEEE SERVICE CENTER, NEW YORK, NY, US, vol. 13, no. 4, October 1998 (1998-10), pages 1046-1052, XP011049626 ISSN: 0885-8977
- SERIZAWA Y ET AL: "EXPERIMENTAL EXAMINATION OF WIDE-AREA CURRENT DIFFERENTIAL BACKUP PROTECTION EMPLOYING BROADBAND COMMUNICATIONS AND TIME TRANSFER SYSTEMS" 1999 IEEE POWER ENGINEERING SOCIETY. SUMMER MEETING. CONFERENCE PROCEEDINGS. EDMONTON, ALBERTA, CANADA, JULY 18 - 22, 1999, IEEE POWER ENGINEERING SOCIETY, NEW YORK, NY : IEEE, US, vol. VOL. 2, 18 July 1999 (1999-07-18), pages 1070-1075, XP000948072 ISBN: 0-7803-5570-9
- WILSON R E: "METHODS AND USES OF PRECISE TIME IN POWER SYSTEMS" IEEE TRANSACTIONS ON POWER DELIVERY, IEEE SERVICE CENTER, NEW YORK, NY, US, vol. 7, no. 1, January 1992 (1992-01), pages 126-132, XP000247103 ISSN: 0885-8977
- LEFRANCOIS W: "synchronisation en temps reel sur un reseau de puissance" CANADIAN COMMUNICATIONS AND POWER CONFERENCE 20-22 OCT. 1976 MONTREAL, QUE., CANADA, 20 October 1976 (1976-10-20), pages 354-355, XP008074797 Canadian Communications and Power Conference IEEE New York, NY, USA
- ARUIIACHALAM V ET AL: "Synchronized monitoring of power network through time synchronizing unit" IEEE/PES TRANSMISSION AND DISTRIBUTION CONFERENCE AND EXHIBITION 2002 : ASIA PACIFIC. YOKOHAMA, JAPAN, OCT. 6 - 10, 2002, IEEE/PES TRANSMISSION AND DISTRIBUTION CONFERENCE AND EXPOSITION, NEW YORK, NY : IEEE, US, vol. VOL. 1 F 3, 6 October 2002 (2002-10-06), pages 436-439, XP010631432 ISBN: 0-7803-7525-4
- BRUNELLO G ET AL: "An application of a protective relaying scheme over an ethernet LAN/WAN" 2001 IEEE/PES TRANSMISSION AND DISTRIBUTION CONFERENCE AND EXPOSITION. ATLANTA, CA, OCT. 28 - NOV. 2, 2001, IEEE/PES TRANSMISSION AND DISTRIBUTION CONFERENCE AND EXPOSITION, NEW YORK, NY : IEEE, US, vol. VOL. 1 OF 2, 28 October 2001 (2001-10-28), pages 522-526, XP010568583 ISBN: 0-7803-7285-9
- SERIZAWA Y ET AL: "SDH-Based Time Synchronous System for Power System Communications", IEEE TRANSACTIONS ON POWER DELIVERY, IEEE SERVICE CENTER, NEW YORK, NY, US, vol. 13, no. 1, 1 January 1998 (1998-01-01), pages 59-65, XP011089048, ISSN: 0885-8977, DOI: 10.1109/61.660850

## Description

### BACKGROUND OF THE INVENTION

This invention relates generally to electrical switchgear and more particularly, to a method and apparatus for protecting, monitoring, and controlling the electrical switchgear.

In an industrial power distribution system, power generated by a power generation company may be supplied to an industrial or commercial facility wherein the power is distributed around the industrial or commercial facility to various equipment such as, for example, motors, welding machinery, computers, heaters, lighting, and other electrical equipment. At least some known power distribution systems include switchgear which facilitates dividing the power into branch circuits which supply power to various portions of the industrial facility. Circuit breakers are provided in each branch circuit to facilitate protecting equipment within the branch circuit. Additionally, circuit breakers in each branch circuit can facilitate minimizing equipment failures since specific loads may be energized or de-energized without affecting other loads, thus creating increased efficiencies, and reduced operating and manufacturing costs. Similar switchgear may also be used within an electric utility transmission system and a plurality of distribution substations, although the switching operations used may be more complex.

Switchgear typically includes multiple devices other than the power distribution system components to provide protection, monitoring, and control of the power distribution system components. For example, at least some known power distribution systems include a monitor device to monitor a performance of the power distribution system, a control device to control an operation of the power distribution system, and a protection device to initiate a protective response when the protection device is activated.

Serizawa Y et al "Wide-Area Current Differential Backup Protection Employing Broadband Communications and Time Transfer Systems" IEEE Transactions on Power Delivery, IEEE Service Centre, New York, NY, US, vol. 13, no. 4, October 1998, pages 1046-1052 discloses ATM transmission networks with time synchronous systems.

US-A-5 041 798 discloses a system for steering mutually phase-locked time-of-day clocks in unison to a higher precision reference clock.

EP-A-0 613 271 discloses a primary and a secondary controller which interface to one or more I/O modules via a bus comprising for communication redundancy purposes a first bus and a second bus.

### BRIEF DESCRIPTION OF THE INVENTION

The present invention provides a method for synchronizing a plurality of processors within a computer system as defined in claim 1 and a computer system as defined in claim 27.

In one embodiment, a method for synchronizing a plurality of processors within a computer system is provided. The computer system includes a plurality of processors that are each communicatively coupled to a respective network wherein each network is independent of each other network. The method includes receiving a plurality of input signals at a first rate from at least one source, transmitting the input signals to a reference object, and transforming the input signal to a known temporal reference. The apparatus is configured to receive a plurality of input signals at a first rate from at least one source, transmit the input signals to a reference object, and transform the input signal to a known temporal reference.

In another embodiment, an apparatus synchronizing a plurality of processors within a computer system is provided. The computer system includes a plurality of processors that are each communicatively coupled to a respective network wherein each network is independent of each other network. The apparatus is configured to receive a plurality of input signals at a first rate from at least one source, transmit the input signals to a reference object, and transform the input signal to a known temporal reference.

### BRIEF DESCRIPTION OF THE DRAWINGS

Figure 1 illustrates an exemplary schematic illustration of a power distribution system that may be used by an industrial or commercial facility for example;
Figure 2 is an exemplary schematic illustration of a node power distribution system that can be used with the power distribution system shown in Figure 1;
Figure 3 is an exemplary schematic illustration of a CCPU that may be used with the power distribution system shown in Figure 1;
Figure 4 is an exemplary schematic illustration of a single node electronic unit that may be used with the power distribution system shown in Figure 1;
Figure 5 is an exemplary schematic illustration of a circuit breaker that may be used with the power distribution system shown in Figure 1;
Figure 6 is a simplified block diagram of a network portion of the power distribution system shown in Figure 1;
Figure 7 is a schematic block diagram of an exemplary embodiment of the hardware clock that may be used in the network portion of the power distribution system that is shown in Figure 6;
Figure 8 is a flowchart illustrating an exemplary process for synchronizing multiple redundant computers shown in Figure 6; and
Figure 9 is a data flow diagram illustrating an exemplary embodiment of a process for synchronizing multiple redundant computers shown in Figure 6.

### DETAILED DESCRIPTION OF THE INVENTION

The methods and apparatus described herein, referred to as system data capture describe an apparatus for a conditional logging, display or processing of data collected by a data capture system. In one embodiment, the method operates in a real-time data capture mode. In another embodiment, the method is also applicable to non-real-time systems. System data capture, when used with a circuit breaker control and protection system, allows system data to be analyzed off-line. Additionally, system data capture facilitates analysis of data collected from an entire system, e.g. current and voltage measurements, and breaker state, to facilitate identifying a plurality of fault types, and distinguishing between a legitimate fault and a nuisance trip as known by one skilled in the art.

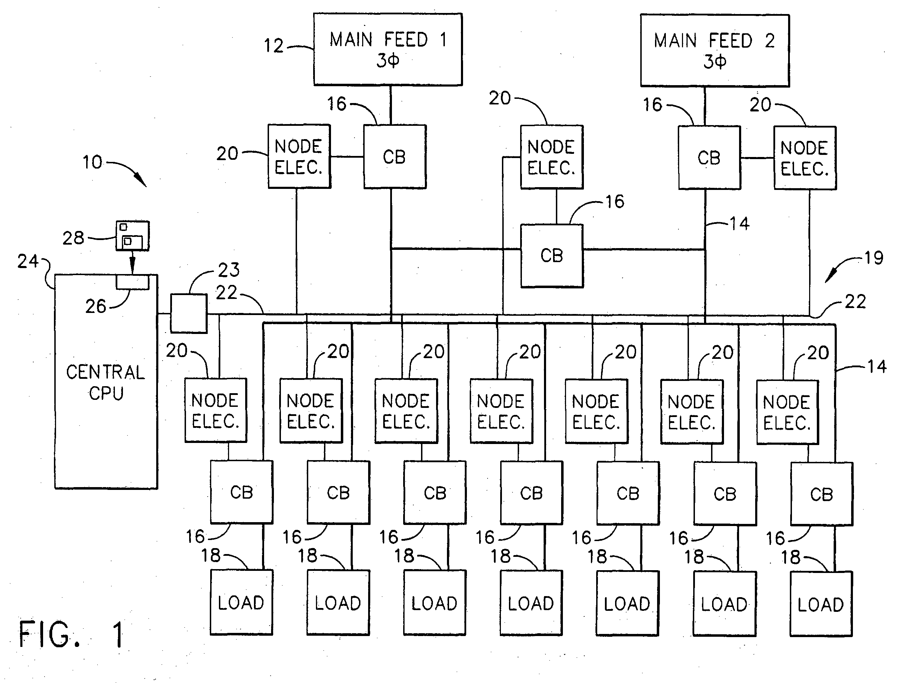

Figure 1 illustrates an exemplary schematic illustration of a power distribution system 10, used by an industrial facility for example. In an exemplary embodiment, system 10 includes at least one main feed system 12, a power distribution bus 14, a plurality of power circuit switches or interrupters, also referred to herein as a circuit breakers (CB) 16, and at least one load 18, such as, but not limited to, motors, welding machinery, computers, heaters, lighting, and/or other electrical equipment.

In use, power is supplied to a main feed system 12, i.e. a switchboard for example, from a source (not shown) such as, but not limited to, a steam turbine, powered from, for example, a nuclear reactor or a coal fired boiler, a gas turbine generator, and a diesel generator. Power supplied to main feed system 12 is divided into a plurality of branch circuits using circuit breakers 16 which supply power to various loads 18 in the industrial facility. In addition, circuit breakers 16 are provided in each branch circuit to facilitate protecting equipment, i.e. loads 18, connected within the respective branch circuit. Additionally, circuit breakers 16 facilitate minimizing equipment failures since specific loads 18 may be energized or de-energized without affecting other loads 18, thus creating increased efficiencies, and reduced operating and manufacturing costs.

Power distribution system 10 includes a circuit breaker control protection system 19 that includes a plurality of node electronics units 20 that are each electrically coupled to a digital network 22. Circuit breaker control protection system 19 also includes at least one central control processing unit (CCPU) 24 that is electrically coupled to digital network 22 via a switch 23 such as, but not limited to, an Ethernet switch 23. In use, each respective node electronics unit 20 is electrically coupled to a respective circuit breaker 16, such that CCPU 24 is electrically coupled to each circuit breaker 16 through digital network 22 and through an associated node electronics unit 20.

In the exemplary embodiment, digital network 22 is a Fast Ethernet protocol network. In another embodiment, digital network 22 includes, for example, at least one of a local area network (LAN) or a wide area network (WAN), dial-in-connections, cable modems, and special high-speed ISDN lines. Digital network 22 also includes any device capable of interconnecting to the Internet including a web-based phone, personal digital assistant (PDA), or other web-based connectable equipment. It should be appreciated that the digital network 22 network is upgradeable based on future revisions to IEEE 802.3(u) and its successors. It should further be appreciated that the digital network 22 is configurable, for example, in a star topology.

In one embodiment, CCPU 24 is a computer and includes a device 26, for example, a floppy disk drive or CD-ROM drive, to facilitate reading instructions and/or data from a computer-readable medium 28, such as a floppy disk or CD-ROM. In another embodiment, CCPU 24 executes instructions stored in firmware (not shown). CCPU 24 is programmed to perform functions described herein, but other programmable circuits can likewise be programmed. Accordingly, as used herein, the term computer is not limited to just those integrated circuits referred to in the art as computers, but broadly refers to computers, processors, microcontrollers, microcomputers, programmable logic controllers, application specific integrated circuits, and other programmable circuits. Additionally, although described in a power distribution setting, it is contemplated that the benefits of the invention accrue to all electrical distribution systems including industrial systems such as, for example, but not limited to, an electrical distribution system installed in an office building.

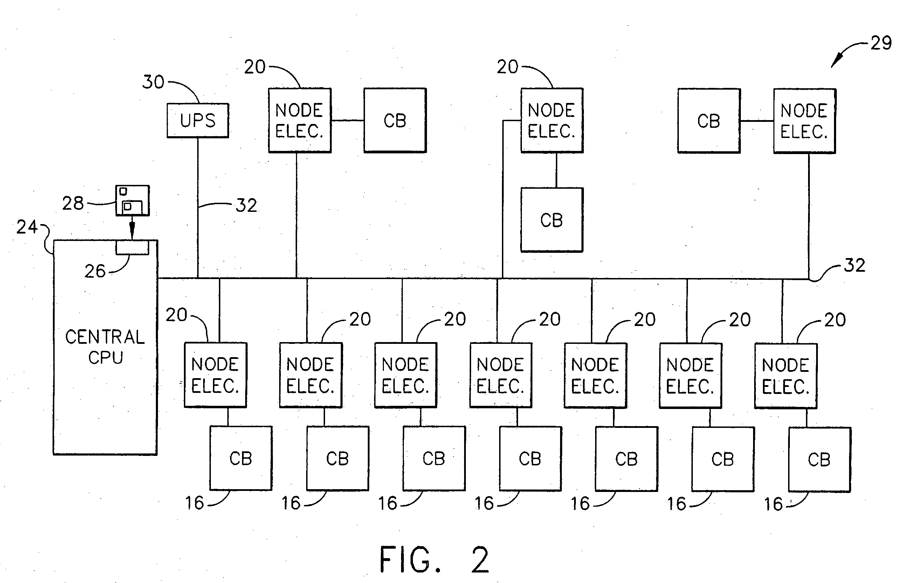

Figure 2 is an exemplary schematic illustration of a node power distribution system 29 that can be used with power distribution system 10 (shown in Figure 1) and more specifically, with circuit breaker control protection system 19 (shown in Figure 1). Node power distribution system 29 includes a power source 30 that is electrically coupled to node electronics units 20 through a node power distribution bus 32. In an exemplary embodiment, power source 30 is an uninterruptible power supply (UPS). In one embodiment, power source 30 receives power from power distribution system 10 and then distributes this power to node electronics units 20 through node power distribution bus 32. In an alternative embodiment, power is not supplied to power source 30, but rather, power source 30 supplies power to node electronics units 20 using an internal power supply, such as, but not limited to, a plurality of batteries (not shown). In another alternate embodiment, node electronic units 20 are powered by secondary current available from current sensor 82 and/or voltage sensor 84. In this embodiment, circuit breaker control protection system 19 would not include node power distribution system 29, power source 30, or node power distribution bus 32.

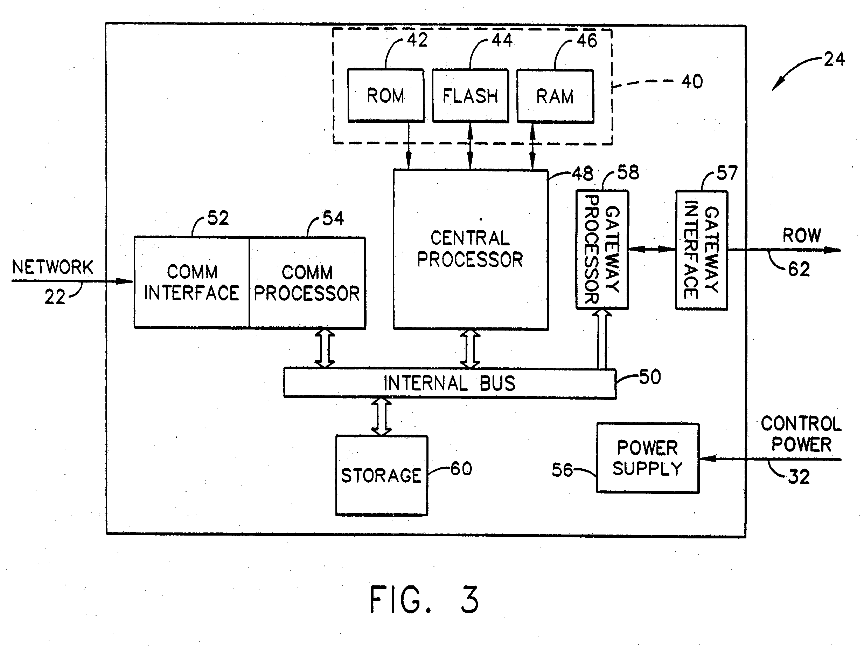

Figure 3 is an exemplary schematic illustration of CCPU 24. CCPU 24 includes at least one memory device 40, such as, but not limited to, a read only memory (ROM) 42, a flash memory 44, and/or a random access memory (RAM) 46. CCPU 24 also includes a central processor unit (CPU) 48 that is electrically coupled to at least one memory device 40, as well as an internal bus 50, a communications interface 52, and a communications processor 54. In an exemplary embodiment, CCPU 24 is a printed circuit board and includes a power supply 56 to supply power to a plurality of devices on the printed circuit board.

Additionally, in an exemplary embodiment, internal bus 50 includes an address bus, a data bus, and a control bus. In use, the address bus is configured to enable CPU 48 to address a plurality of internal memory locations or an input/output port, such as, but not limited to communications interface 52 through communications processor 54, and a gateway interface 57, through a gateway processor 58. The data bus is configured to transmit instructions and/or data between CPU 48 and at least one input/output, and the control bus is configured to transmit signals between the plurality of devices to facilitate ensuring that the devices are operating in synchronization. In the exemplary embodiment, internal bus 50 is a bidirectional bus such that signals can be transmitted in either direction on internal bus 50. CCPU 24 also includes at least one storage device 60 configured to store a plurality of information transmitted via internal bus 50.

In use, gateway interface 57 communicates to a remote workstation (not shown) via an Internet link 62 or an Intranet 62. In the exemplary embodiment, the remote workstation is a personal computer including a web browser. Although a single workstation is described, such functions as described herein can be performed at one of many personal computers coupled to gateway interface 57. For example, gateway interface 57 may be communicatively coupled to various individuals, including local operators and to third parties, e.g., remote system operators via an ISP Internet connection. The communication in the example embodiment is illustrated as being performed via the Internet, however, any other wide area network (WAN) type communication can be utilized in other embodiments, i.e., the systems and processes are not limited to being practiced via the Internet. In one embodiment, information is received at gateway interface 57 and transmitted to node electronics unit 20 via CCPU 24 and digital network 22. In another embodiment, information sent from node electronics unit 20 is received at communication interface 52 and transmitted to Internet 62 via gateway interface 57.

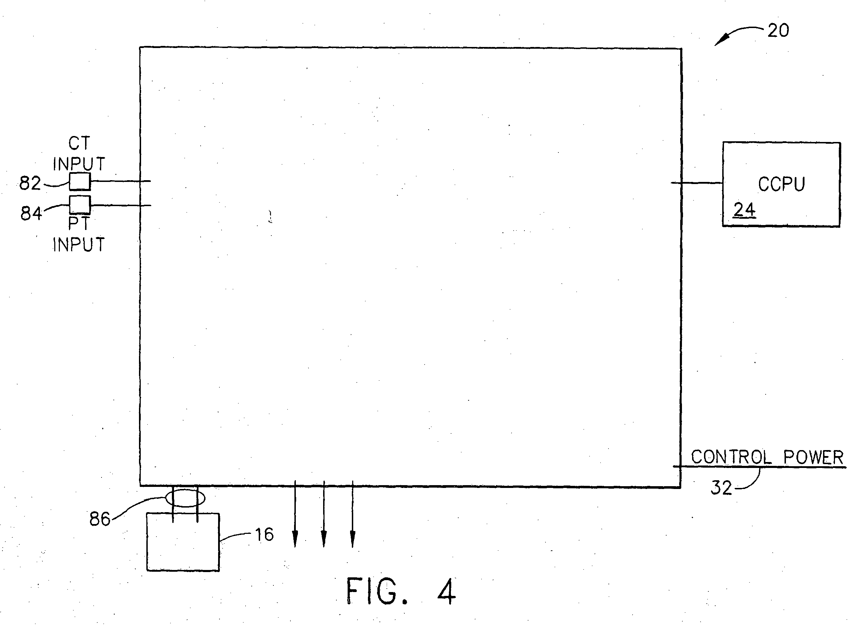

Figure 4 is an exemplary schematic illustration of single node electronic unit 20. In the exemplary embodiment, node electronic unit 20 is a unitary device mounted remotely from CCPU 24 and circuit breaker 16. In an exemplary embodiment, node electronic unit 20 is separate from, but proximate to circuit breaker 16. In an exemplary embodiment, node electronic unit 20 is a printed circuit board.

In one embodiment, node electronics unit 20 receives signals input from a plurality of devices, such as, but not limited to, a current sensor 82, a voltage sensor 84, and/or circuit breaker 16. Status signals from circuit breaker 16 can include signals related to one or more conditions of the breaker, such as, but not limited to, an auxiliary switch status, and a spring charge switch status. Additionally, node electronics unit 20 sends signals to at least circuit breaker 16 in order to control one or more states of the breaker.

In use, signals are transmitted to CCPU 24 via node electronics unit 20, and digital network 22. Node electronics unit 20 receives the signals and packages a digital message that includes the signals and additional data relating to a health and status of node electronics unit 20. The health and status data may include information based on problems found by internal diagnostic routines and a status of self checking routines that run locally in node electronics unit 20. CCPU 24 processes digital message using one or more protection algorithms, monitoring algorithms, and any combination thereof. In response to the processing of digital message, CCPU 24 sends digital message back to node electronics unit 20 via digital network 22. In the exemplary embodiment, node electronics unit 20 actuates circuit breaker 16 via signal in response to digital message received from CCPU 24. In one embodiment, circuit breaker 16 is actuated in response to commands sent only by CCPU 24, i.e., circuit breaker 16 is not controlled locally by node electronics unit 20, but rather is operated remotely from CCPU 24 based on digital message received from node electronics unit 20 over network 22.

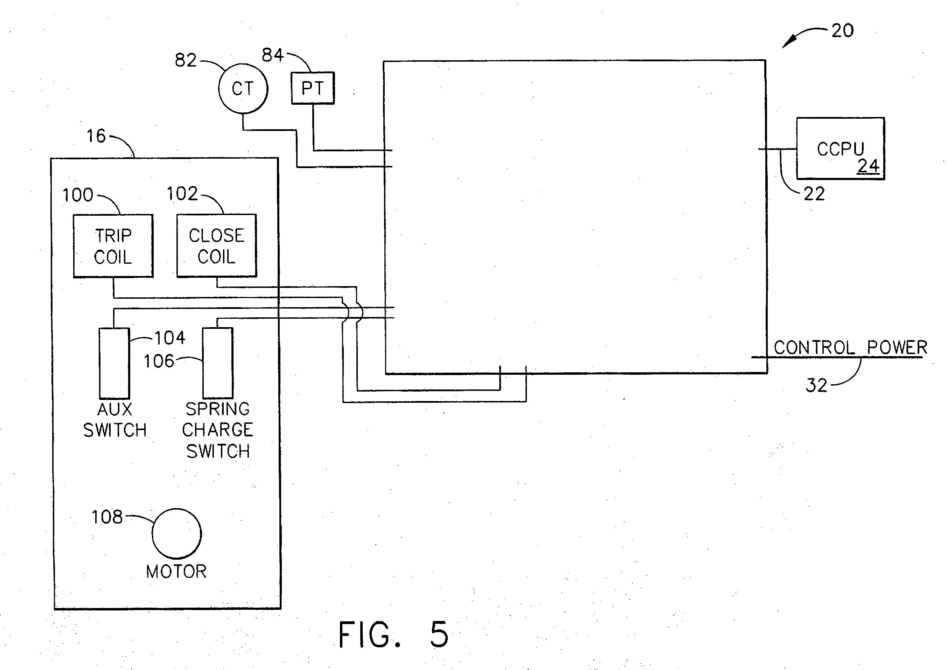

Figure 5 is an exemplary schematic illustration of circuit breaker 16 that is electrically coupled to node electronics unit 20. In the exemplary embodiment, circuit breaker 16 includes a switch assembly that includes movable and/or stationary contacts, an arc suppression means, and a tripping and operating mechanism. Circuit breaker 16 includes only a trip coil 100, a close coil 102, an auxiliary switch 104, a spring charge switch 106, and a motor 108. Circuit breaker 16 does not include a trip unit. The various components of breaker 16 (e.g., trip coil 100, close coil 102, auxiliary switch 104, spring charge switch 106, motor 108) can be powered by node electronics unit 20. Alternately, breaker 16 can be powered by secondary current available from current sensor 82 and/or voltage sensor 84.

Circuit breaker 16 is in electrical communication with node electronics unit 20 through a wiring harness, which may include copper wiring, communications conduits, and any combination thereof. Current sensor 82, and voltage sensor 84 are in electrical communication with node electronics unit 20 through a cable that may include copper wiring, communications conduits, and any combination thereof. In an exemplary embodiment, circuit breaker 16 is a unitary device mounted proximate to node electronics unit 20, current sensor 82, and voltage sensor 84.

In use, actuation signals from node electronics unit 20 are transmitted to circuit breaker 16 to actuate a plurality of functions in circuit breaker 16, such as, but not limited to, operating a trip coil 100, operating a close coil 102, and affecting a circuit breaker lockout feature. An auxiliary switch 104 and operating spring charge switch 106 provide a status indication of circuit breaker parameters to node electronics unit 20. Motor 108 is configured to recharge an operating spring, configured as a close spring (not shown) after circuit breaker 16 closes. It should be appreciated that the motor 108 can include, for example, a spring charge switch, a solenoid or any other electro-mechanical device capable of recharging a trip spring. To close circuit breaker 16, a close coil 102 is energized by a close signal from actuation power module (not shown). Close coil 102 actuates a closing mechanism (not shown) that couples at least one movable electrical contact (not shown) to a corresponding fixed electrical contact (not shown). The closing mechanism of circuit breaker 16 latches in a closed position such that when close coil 102 is de-energized, circuit breaker 16 remains closed. When breaker 16 closes, an "a" contact of auxiliary switch 104 also closes and a "b" contact of auxiliary switch 104 opens. The position of the "a" and "b" contacts is sensed by node electronics unit 20. To open circuit breaker 16, node electronics unit 20 energizes trip coil (TC) 100. TC 100 acts directly on circuit breaker 16 to release the latching mechanism that holds circuit breaker 16 closed. When the latching mechanism is released, circuit breaker 16 will open, opening the "a" contact and closing the "b" contact of auxiliary switch 104. Trip coil 100 is then de-energized by node electronics unit 20. After breaker 16 opens, with the close spring recharged by motor 108, circuit breaker 16 is prepared for a next operating cycle. In the exemplary embodiment, each node electronics unit 20 is coupled to circuit breaker 16 in a one-to-one correspondence. For example, each node electronics unit 20 communicates directly with only one circuit breaker 16. In an alternative embodiment, node electronics unit 20 may communicate with a plurality of circuit breakers 16.

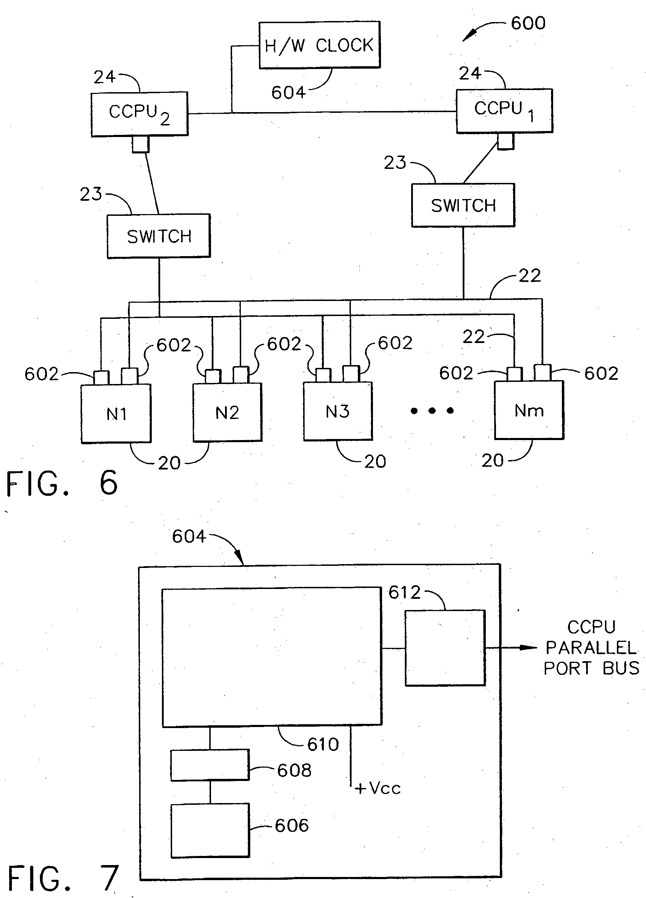

Figure 6 is a simplified block diagram of a network portion 600 of power distribution system 10 shown in Figure 1. Components shown in Figure 6 that are identical to components shown in Figure 1 are numbered using the same reference numerals in Figure 6 as were used in Figure 1. Accordingly, network portion 600 of power distribution system 10 includes a plurality of node electronics units 20, each node electronics unit 20 is communicatively coupled to a doubly redundant network 22 through a communications interface 602 dedicated to each network 22. In the exemplary embodiment, network 22 is doubly redundant. In an alternative embodiment, network 22 may be redundant to a level predetermined by a user's requirements. Each network 22 is communicatively coupled to a network switch 23, which is communicatively coupled to a respective CCPU 24. Each CCPU 24 is communicatively coupled to a hardware clock 604. In the exemplary embodiment, a parallel port of each CCPU 24 is used to receive output signals from hardware clock 604. Hardware clock 604 may be redundant to a level predetermined by a user's requirements.

On operation, hardware clock 604 sends output signals that may include interrupt pulses at a regular interval to all CCPUs 24. Each interrupt pulse is assigned a sequence number. In the exemplary embodiment, the sequence number is 16 bits long. In another embodiment, the sequence number may be between 4 bits long and 64 bits long. Each interrupt pulse and sequence number are transmitted to each CCPU 24 parallel port such that each interrupt is continually identified by its respective sequence number. At each interrupt pulse, hardware clock 604 increments the sequence number such that a new sequential sequence number is sent with each successive interrupt pulse. When processor 48 receives the interrupt pulse, processor 48 services the interrupt according to its programmed instructions. In the exemplary embodiment, processor 48 transmits a transreference signal that includes a reference sequence number to all node electronics units 20 on network 22. To maintain a reference number, processor 48 increments an internal 64-bit register each time it receives the output signal from clock 604.

Additionally, processor 48 checks the incoming interrupt pulses for errors. Processor 48 estimates a time for the next interrupt pulse to be received. In the exemplary embodiment, a watchdog timer is used to estimate the expected time of the next input signal, or interrupt pulse. If the interrupt pulse is received within an expected window time, processor 48 uses the pulse to synchronize its own clock to the hardware clock 604 pulses. If the interrupt pulse is outside the expected time window, processor 48 determines if interrupt pulses were missed, meaning interrupt pulses were not received by processor 48. Intermittent or unreliable receipt of pulses may indicate a degradation of hardware clock 604 and/or interconnecting cabling and may cause CCPUs 24 and node electronics units 20 to lose synchronization. When interrupt pulses are missed, processor 48 attempts to restore the reference number by using its internal clock to estimate the number of interrupt pulses that were missed and incrementing the reference number by that number of estimated missed pulses. By this method reference number maintains a proper time increment relative to a starting point that may be coordinated to other timekeeping systems. In the exemplary embodiment, power distribution system 10 events may be coordinated with a utility company supply using the reference number. When processor 48 determines a failure of the interrupt pulses from hardware clock 406, an alternate source of stable pulses may be used. In the exemplary embodiment, processor 604 clock is used to supply interrupt pulses when hardware clock 604 fails. In an alternative embodiment, one of the CCPUs 24 connected to network 22 may be interconnected to each other processor 48 to supply an alternate source of stable pulses when hardware clock 604 fails.

Node electronics units 20 receive the transreference signal from CCPU 24 via network 22. Each node electronics unit 20 receives a transreference signal from each CCPU 24. In the exemplary embodiment, network 22 is doubly redundant and, as such, each node electronics unit 20 receives two transreference signals including an identifying sequence number. To properly synchronize the collection of data from the plurality of sensors associated with node electronics unit 20, node electronics unit 20 uses a corrector function procedure to synchronize its clock with the incoming transreference signals. In one embodiment, node electronics unit 20 error checks the incoming transreference signals for expected timing. If any of the CCPUs 24 connected to the network is sending transreference signals that fall outside the expected time window, that CCPU 24 will be flagged as being potentially faulty and the transreference signals from that CCPU 24 will be ignored. If all CCPUs are sending transreference signals that arrive within the expected time window, node electronics unit 20 determines a corrector procedure to synchronize the clock of node electronics unit 20 to the clock of CCPU 24. In the exemplary embodiment, node electronics unit 20 uses a predetermined preferred CCPU 24 to synchronize its clock to. As long as preferred CCPU 24 sends transreference signals within the expected time window, node electronics unit 20 will synchronize its clock to the preferred CCPU clock. If maser CCPU 24 clock sends transreference signals outside the expected time window, node electronics unit 20 may switch to synchronizing to a predetermined CCPU 24, based on an order of preference, until the preferred CCPU 24 returns to sending transreference signals within the expected time window. In an alternative embodiment, node electronics unit 20 averages the time it receives corresponding transreference signals from each CCPU 24 and synchronizes its clock to this average. Node electronics unit 20 uses the transreference signals in conjunction with a software phase lock loop to adjust the node electronics unit clock to be in synchronization with CCPU 24.

Figure 7 is a schematic block diagram of an exemplary embodiment of hardware clock 604 that may be used in the network portion 600 of power distribution system 10 that is illustrated in Figure 6. In the exemplary embodiment, hardware clock 604 includes a crystal oscillator 606 electrically coupled to a divider circuit 608. An output of divider circuit 608 is coupled to an input of a field programmable gate array (FPGA) device 610. An output of FPGA 610 is coupled to a tristate buffer 612. The output of buffer 612 is coupled to a parallel port bus coupled to a parallel port of each of CCPU 24 coupled to power distribution system 10.

In use, FPGA 608 is used to divide clock pulses obtained from crystal oscillator 606 to a desired frequency for the interrupt signal. In the exemplary embodiment, crystal oscillator 606 operates at a frequency of approximately 1.832 MHz. Divider 608 divides the frequency of oscillator 606 down to approximately 4.0 kHz. FPGA 608 is also used to obtain an 8 or 16 bit sequence number. In the exemplary embodiment, the interrupt signal, a low/high byte signal, and the 2x8 bit sequence number (a 16 bit value given 1 byte at a time) are read by the parallel ports of all CCPUs 24.

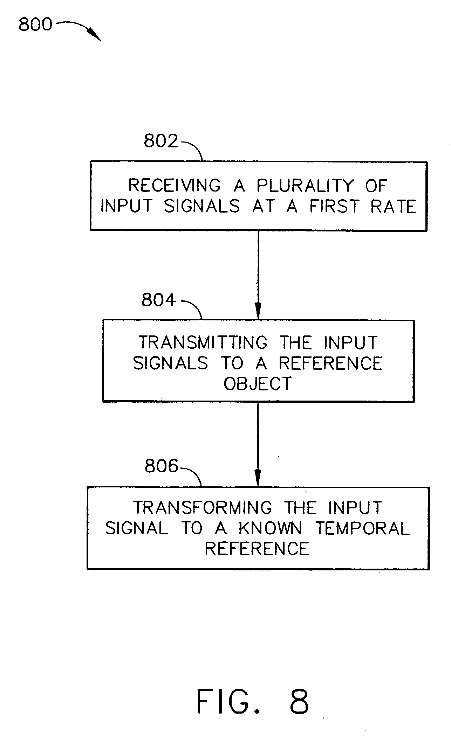

Figure 8 is a flowchart 800 illustrating an exemplary process for synchronizing multiple redundant computers shown in Figure 6. Each CCPU 24 operating on power distribution system 10 receives 802 a stream of interrupt pulses from hardware clock 604 through its respective parallel port. Although the interrupt pulses are described as being received by each CCPU 24 through their respective parallel port, each CCPU 24 could receive the interrupt pulses through any convenient port and/or a hardwire connection to hardware clock 604. CCPU 24 also receives 804 a sequence number associated with each pulse. The sequence number is generated by hardware clock 604. In the exemplary embodiment, the sequence number is a sixteen-bit number that is transmitted to all CCPUs 24 over an eight-bit bus in two bytes.

Each interrupt pulse causes each CCPU processor 48 to read the sequence number provided by hardware clock 604. The interrupt pulse is used by processor 48 for the executive clock that controls all internal computations. Upon receipt of each interrupt processor 48 transmits 804 the input signal including the sequence number to a reference object which increments an internal reference number counter that counts each interrupt pulse received and allows for reconstruction and coordination of data with external systems by transforming 806 the input signal to a known temporal reference. Processor 48 generates a multicast message that is broadcast via network 22 to all node electronics units 20. Each message includes a transreference signal and the sequence number associated with the pulse.

Each node electronics unit 20 operating on network 22 receives a multicast message from each CCPU 24 operating on network 22. Each node electronics unit 20 uses a predetermined procedure to arbitrate any differences between timing of messages. In one embodiment, node electronics unit 20 treats one of the CCPUs 24 as preferred and node electronics unit 20 uses the transreference signal and sequence number from that CCPU 24 until node electronics unit 20 determines that CCPU 24 is unreliable. In another embodiment, node electronics unit 20 may use an averaging technique or a voting technique to determine which CCPUs transreference signal is the most correct pulse to use.

Node electronics unit 20 synchronizes collecting data from its respective sensors using the transreference signal and the sequence number to sample sensors and internal electronic component registers such that the state of power distribution system 10 can be reconstructed accurately in CCPU 24. In a large power distribution system 10 each node electronics unit 20 may sample sensors and data registers at a different real-time due to time lags inherent in the system between node electronics units 20. Sampling many electrical parameters which are constantly changing with respect to time at even slightly different real-time would yield inaccurate results but, when each sampled parameter is associated with a transreference signal and sequence number, CCPU 24 can account for variations in the real-time when each sample was taken.

Node electronics unit 20 includes a software phase lock loop that uses the broadcast message and the transreference signal and sequence number to synchronize its clock to the CCPU clock.

Each CCPU 24 is programmed to perform error-checking of the incoming interrupt pulses. Each CCPU processor 48 determines an estimated time window for when to expect a next interrupt signal to arrive from hardware clock 604. If the next interrupt pulse is received within the expected window, processor 48 assumes hardware clock 604 and the interconnecting cabling is operating properly and takes no corrective action. If at least one interrupt pulse arrives outside the expected window, processor 48 executes an error handling routine that determines corrective action to maintain power distribution system 10 within synchronization. In the exemplary embodiment, processor 48 waits for four missed pulses before initiating the error-handling routine. In another embodiment, the period processor 48 waits is user configurable from zero missed pulses (processor uses an alternate source of pulses exclusively) to a maximum number, indicating processor 48 never uses an alternate source of pulses. In one embodiment, upon detecting that interrupt pulses have stopped arriving, switches to an alternate source of interrupt pulses, such as, for example, the processor clock, an alternate CCPU processor clock, or another alternate source of pulses. Processor 48 then estimates how many pulses were missed and increments the reference number register by that number to return the reference number register to as close to its proper time as possible. When the interrupt pulses are restored, processor 48 executes a procedure to restore synchronization to the hardware clock 604.

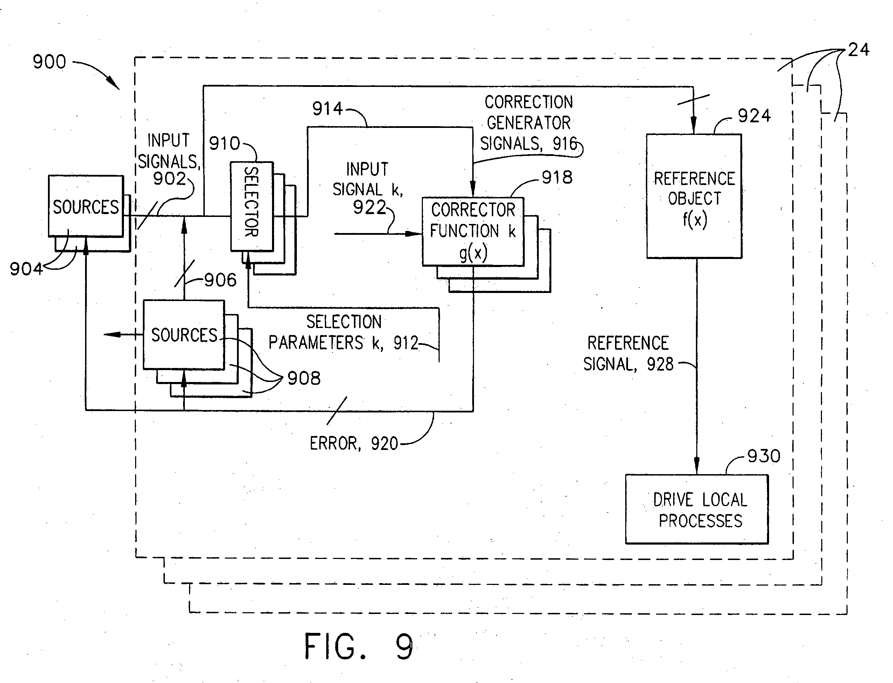

Figure 9 is a data flow diagram illustrating an exemplary embodiment of a process 900 for synchronizing multiple redundant computers shown in Figure 6. Multiple CCPUs 24 may be included in power distribution system 10 depending on predetermined requirements. Each CCPU 24 includes similar data structures but, only data structures included in one CCPU are described herein. Additionally, a similar data flow diagram is embodied in each node electronics unit 20, which operates in a manner similar to that described herein. CCPU 24 receives external input timing signals 902 from external timing sources 904 located remote from CCPU 24. Timing signals as used herein refer to a timing clock pulse, and to signals whose arrival indicates a timing event and that includes a timing portion in a message. For example, a timing signal may be a message 64 bits long that includes a first group of bits indicating a sequence number and a second group of bits indicating a relative timestamp. A component or data structure receiving the timing signal may record a local time that the timing signal was received, parse the information within the timing signal, and verify its own clock's operation based on the timing information received in the timing signal. Additionally, a component or data structure may receive multiple timing signals from multiple sources and use an algorithm to determine a health and status of its own clock or any other clock from which it has received an input signal. In the exemplary embodiment, external timing sources 904 may include a hardware clock wherein input signals 902 may include a sequence number six bits long to sixteen bits long, another CCPU 24, and an auxiliary source external to system 10.

CCPU 24 also receives internal timing signals 906 from internal timing sources 908 located internal to CCPU 24, for example, but, not limited to a processor clock. Each of at least one selectors 910 receives input timing signals 902 and 906, and a plurality of selection parameters 912. Selection parameters 912 are used by selector 910 to determine which of input signals 902 and 906 are used as a primary source for generating an output signal. In the exemplary embodiment, selection parameters 912 may be used to determine an order of preference of sources 904 and 908, and a criteria to be used for determining a presence of input signals 902 and 906 within an expected time window, determining an absence of input signals 902 and 906, determining invalid input signals 902 and 906, and determining noisy input signals 902 and 906. To determine an expected time window, selector 910 may use a watchdog timer. If selector 910 determines one of input signals 902 and 906 does not meet criteria indicated by selection parameters 912, selector 910 may generate and transmit correction generator signals 916 which, are input to a corrector function 918. Corrector function 918 determines a timing error signal 920 based on correction generator signals 916 and an input signal k 922. Input signal k 922 is associated with selection parameters 912 such that selector 910 and corrector function 918 operate cooperatively. Error signal 920 is transmitted to a respective one of sources 902 and 906 which is associated with the input signal error. Each of respective sources 902 and 906 adjusts its respective input signal based on error signal 920.

Input signals 902 and 906 are also received by a reference object 924 that transforms input signals 902 and 906 into a reference signal based on input signals 902 and 906 and an internal algorithm that maintains a reference to absolute time. For example, input signals 902 and 906 may include a sequence number that is six bits long. Each input signal 902 and 906 may arrive at a periodicity of, for example, two-hundred and sixty microseconds. With each sequence number in each input signal 902 and 906 incremented from the sequence number in each previous input signal 902 and 906, the sequence number will turnover in a relatively short period of time. One solution to maintain a unique timing system would be to increase the number of bits used by each sequence number. This solution has the disadvantage of increasing a length of input signals 902 and 906. In the exemplary embodiment, sequence number is six bits long. In alternative embodiments, sequence number may be sixteen bits long. Reference object 924 receives input signals 902 and 906 and transforms them into a transreference signal 928 includes a reference sequence number including a sufficient number of bits such that a unique time reference is maintained. In the exemplary embodiment, reference sequence number is sixty four bits long. Transreference signal 928 is used locally within CCPU 24 to drive local processes 930 and transmitted over network 22 to node electronics units 20 wherein transreference signal 928 is used as an input signal to each node electronics unit 20 timing process.

The above-described power distribution multiple synchronized redundant computers methods and systems are cost-effective and highly reliable. Each system includes a central control processing unit (CCPU) and networked devices to facilitate protecting a set of switchgear. Multiple redundant computers are synchronized using an external hardware clock with various backups for maintaining synchronization during periods of equipment failure and maintenance. Devices local to each circuit breaker monitor voltage and current signals from sensors located proximate each circuit breaker. The CCPU receives all monitored signals from all devices over the high-speed network. To ensure parameters measured at one node electronics unit corresponds to parameters measured at each other node electronics unit, all CCPUs and all node electronics units within the power distribution system are synchronized to a primary clock. The CCPU may then implement protection and optimization algorithms for each breaker node electronics unit based on global voltage and current signals. Accordingly, the power distribution system hardware clock facilitates protection and optimization of power system operation in a cost-effective and reliable manner.

Exemplary embodiments of power distribution system components are described above in detail. The components are not limited to the specific embodiments described herein, but rather, components of each system may be utilized independently and separately from other components described herein. Each power distribution system component can also be used in combination with other power distribution system components.

While the invention has been described in terms of various specific embodiments, those skilled in the art will recognize that the invention can be practiced with modification within the scope of the claims.

## Claims

1. A method for synchronizing a plurality of processors (24) within a computer system wherein the computer system includes a plurality of processors (24), each processor being part of a respective at least doubly redundant network (22), said method comprising:
receiving in the processors (24) a plurality of input timing signals (902, 906) at a first rate from at least one source (904, 908);
transmitting the input timing signals to a reference object (924) in the processors (24);
transforming the input timing signals within said reference object (924) to a temporal reference signal which is the same for each network (22);
generating a reference signal (928) in each processor (24) based on the transformed input signal wherein each reference signal (928) is in the same temporal relationship with the reference signal (928) in each other processor (24);
executing a plurality of processes (930) in each processor based on each respective reference signal;
wherein the computer system includes a plurality of node electronic units (20), each of the plurality of node electronics units (20) being communicatively coupled to the at least doubly redundant network (22),
transmitting the reference signal (928) over the at least doubly redundant network (22) in the form of a transreference signal (928) with a sequence number;
wherein the node electronics units (20) include at least one clock, and wherein the method further comprises: executing node electronics unit internal processes based on the clock; receiving the transreference signal with a sequence number at the node electronics unit; and executing a referencing process when the transreference signal with the sequence number is received;
wherein executing the referencing process further comprises:
determining the status of the transreference signal (928) with the sequence number based on the clock;
recording a receipt time of the transreference signal (928) with the sequence number based on the clock;
determining a clock error based on the transreference signal (928) with the sequence number;
adjusting the clock based on the determined clock error; and
synchronizing node electronics unit processes based on the adjusted clock;
wherein each processor (24) includes a corrector function (918) and wherein the method further comprises determining a status of a first input signal based on the first input signal and each other input signal (906);
determining an input signal error based on the first input signal (902, 906) and each other input signal, and
transmitting the error signal (920) to a respective one of sources (904,908) which is associated with the input signal error; and
adjusting its input signal based on the transmitted error signal.

2. A method in accordance with Claim 1, wherein said receiving a plurality of input signals comprises receiving a plurality of input signals (902, 906) from at least one of a source (908) internal to the processor (24), and a source (908) internal to any other of the plurality of processors (24).

3. A method in accordance with Claim 1 or 2, wherein said receiving a plurality of input signals (902) comprises receiving a plurality of input sequence numbers.

4. A method in accordance with Claim 3, wherein said receiving a plurality of input sequence numbers (902) comprises receiving a plurality of input sequence numbers that are at least six bits long.

5. A method in accordance with Claim 3, wherein said receiving a plurality of input sequence numbers (902) comprises receiving a plurality of input sequence numbers that are sixteen bits long.

6. A method in accordance with Claim 1, wherein said generating a transreference signal (928) comprises generating a reference signal that includes a transreference sequence number.

7. A method in accordance with Claim 6, wherein said generating a transreference signal (928) comprises generating a reference signal that includes a transreference sequence number sixty-four bits long.

8. A method in accordance with Claim 1, wherein executing a referencing process comprises executing a referencing process using at least one of an internal clock, and an external clock.

9. A method in accordance with Claim 8, wherein executing a referencing process comprises executing a referencing process based on the reference signal with a sequence number as the clock.

10. A method in accordance with Claim 1, 8 or 9, wherein adjusting the clock based on the error calculation comprises adjusting the first clock using a phase lock loop (PLL).

11. A method in accordance with Claim 1, 8 or 9, wherein adjusting the clock based on the error calculation comprises setting the clock from the reference signal with a sequence number.

12. A method in accordance with any of the preceding Claims, further comprising:
determining a first out-of-sync condition based on the determined error;
and transmitting the first out-of-sync signal to each processor (24).

13. A method in accordance with Claim 12, wherein transmitting the first out-of-sync signal to each processor (24) comprises transmitting the first out-of- sync signal that includes at least one clock value.

14. A method in accordance with Claim 12 or 13, further comprising determining anout-of-sync signal for each node electronics unit (20) based on at least one of the firstout-of-sync signal, and each processor reference signal.

15. A method in accordance with any of the preceding Claims, wherein each clock includes a clock sequence number, and wherein determining a first clock error based on the transreference signal with a sequence number comprises determining a first clock error based on the transreference signal with a sequence number.

16. A method in accordance with any of the preceding Claims, wherein determining a status of a first input signal (902, 906) comprises at least one of determining a presence of the first input signal within an expected time window, determining an absence of the first input signal, determining an invalid first input signal, and determining a noisy first input signal.

17. A method in accordance with Claim 16, wherein determining an absence of the first input signal (902, 906) comprises using a watchdog timer to determine the absence of the first input signal.

18. A method in accordance with any of the preceding Claims, wherein adjusting each input signal (902, 906) comprises adjusting each input signal using a phase lock loop at the input signal source (904, 908).

19. A method in accordance with any of the preceding Claims, wherein adjusting each input signal (902, 906) comprises adjusting each input signal by setting the source (904, 908) using one other of the input signals.

20. A method in accordance with any of the preceding Claims, further comprising generating a transreference signal (928) based on a transformed input signal (902, 906) wherein the transformation is modified upon at least one of the occurrence of a first event and the occurrence of a transition to an unsatisfactory status of at least one input signal.

21. A method in accordance with Claim 20, wherein generating a transreference signal (928) comprises replacing each unsatisfactory input signal (902, 906) with an available input signal based on the order of preference of input signals.

22. A method in accordance with Claim 20 or 21, wherein generating a transreference signal (928) comprises generating a reference signal wherein the first event is a loss of at least one input signal (902, 906).

23. A method in accordance with any of the preceding Claims, further comprising generating a transreference signal (928) based on a transformed input signal (902, 906) wherein the transformation is modified upon at least one of the occurrence of a second event and the occurrence of a transition to a satisfactory status of at least one input signal.

24. A method in accordance with Claim 23, wherein generating a transreference signal (928) comprises replacing an available input signal (902, 906) with a satisfactory input signal based on the order of preference of input signals.

25. A method in accordance with Claim 23 or 24, wherein generating a transreference signal (928) comprises generating a reference signal wherein the second event is a restoration of at least one input signal (902, 906).

26. A method in accordance with Claim 23, wherein generating a transreference signal (928) comprises generating a reference signal based on an error signal (920) generated by the corrector function (918).

27. A computer system including apparatus for synchronizing a plurality of processors (24) within the computer system, said computer system comprising a plurality of processors (24), each said processor (24) being communicatively coupled to a respective at least doubly redundant network (22), said apparatus comprising:
means for receiving a plurality of input timing signals (902, 906) at a first rate from at least one source (904, 908);
a reference object (924);
means for transmitting the input timing signals (902, 906) to the reference object (924); and
means in the reference object (924) for transforming the input timing signals to a temporal reference signal (928) which is the same for each network (22);
means for generating a reference signal (928) in each processor (24) based on the temporal reference signal (928) wherein each reference signal is in the same temporal relationship with a reference signal in each other processor; and
means for executing a plurality of processes (930) in each processor based on each respective reference signal;
wherein said computer system further comprises a plurality of node electronic units (20), each of said plurality of node electronics units communicatively coupled to the at least doubly redundant network (22), and wherein the system further comprises means for transmitting the reference signal over the network in the form of a transreference signal with a sequence number;
wherein each said node electronics units (20) comprises at least one clock, and wherein said system further comprises:
means for executing node electronics unit internal processes based on the clock;
means for receiving the transreference signal with a sequence number at the node electronics unit;
means for executing a referencing process when the transreference signal is received;
means for determining a status of the transreference signal with the sequence number based on the clock;
means for recording a receipt time of the transreference signal with the sequence number based on the clock;
means for determining a clock error based on the sequence number;
means for adjusting the clock based on the determined error clock; and
means for synchronizing node electronics unit processes based on the adjusted clock;
wherein each processor includes a corrector function (918) and wherein said system further comprises means for determining a status of a first input signal (902, 906) based on the first input signal and each other input signal;
means for determining an input signal error based on the first input signal (902, 906) and each other input signal, and
means for transmitting an error signal (920) to a respective one of sources (904, 908) which is associated with the input signal error; and
means for adjusting its input signal based on the transmitted error signal.

28. A system in accordance with Claim 27, wherein the means for receiving a plurality of input timing signals (902, 906) comprises means for receiving input timing signals (902, 906) from at least one of a source internal to said processor (908), and from a source internal to any other of said plurality of processors (904).

29. A system in accordance with Claim 27 or 28, further comprising means for receiving a plurality of input sequence numbers related to the input timing signals.

30. A system in accordance with Claim 29, wherein the means for receiving a plurality of input sequence numbers is adapted to receive sequence numbers that are at least six bits long.

31. A system in accordance with Claim 29, wherein the means for receiving a plurality of input sequence numbers is adapted to receive sequence numbers that are at least sixteen bits long.

32. A system in accordance with Claim 27, wherein the means for generating a reference signal (928) includes means for generating a reference signal that includes a reference sequence number.

33. A system in accordance with Claim 32, wherein the means for generating a reference signal (928) includes means for generating a reference signal that includes a reference sequence number sixty-four bits long.

34. A system in accordance with Claim 27, further comprising means for executing a referencing process using at least one of an internal clock, and an external clock.

35. A system in accordance with Claim 34, further comprising means for executing a referencing process based on the transreference signal with a sequence number as the clock.

36. A system in accordance with Claim 27, 34 or 35, further comprising means for adjusting the first clock using a phase lock loop (PLL).

37. A system in accordance with Claim 27, 34 or 35, further comprising means for setting the clock from the transreference signal with a sequence number.

38. A system in accordance with any of Claims 27 to 37, further comprising:
means for determining a first out-of-sync condition based on the determined error; and
means for transmitting the first out-of-sync signal to each processor (24).

39. A system in accordance with Claim 38, further comprising means for transmitting the first out-of-sync signal wherein the signal comprises at least one clock value.

40. A system in accordance with Claim 38 or 39, further comprising means for determining anout-of-sync signal for each node electronics unit (20) based on at least one of the firstout-of-sync signal, and each processor reference signal.

41. A system in accordance with any of Claims 27 to 40, wherein each clock includes a clock sequence number, and wherein said system further comprises means for determining a clock error based on the transreference signal with a sequence number.

42. A system in accordance with Claim 27, further comprising at least one selected from the groups consisting of: means for determining a presence of the first input signal (902, 906) within an expected time window, means for determining an absence of the first input signal, means for determining an invalid first input signal, and means for determining a noisy first input signal.

43. A system in accordance with Claim 42, further comprising means for using a watchdog timer to determine the absence of the first input signal (902, 906).

44. A system in accordance with Claim 27, further comprising means for adjusting each input signal (902, 906) using a phase lock loop at the input signal source.

45. A system in accordance with Claim 27, further comprising means for adjusting each input signal (902, 906) by setting the source using one other of the input signals.

46. A system in accordance with any of Claims 27 to 45, further comprising means for generating a reference signal (928) based on a transformed input signal (902, 906) wherein the transformation is modified upon at least one of the occurrence of a first event and the occurrence of a transition to an unsatisfactory status of at least one input signal.

47. A system in accordance with Claim 46, further comprising means for replacing each unsatisfactory input signal (902, 906) with an available input signal based on the order of preference of input signals.

48. A system in accordance with Claim 46 or 47, wherein the first event is a loss of at least one input signal (902, 906).

49. A system in accordance with any of Claims 27 to 48, further configured to generate a reference signal (928) based on a transformed input signal wherein the transformation is modified when at least one of a second event occurs, and a transition to a satisfactory status of at least one input signal occurs.

50. A system in accordance with Claim 49, further comprising means for replacing an available input signal (902, 906) with a transitioned to satisfactory input signal based on the order of preference of input signals.

51. A system in accordance with Claim 49 or 50, wherein the second event is a restoration of at least one input signal (902, 906).

52. A system in accordance with Claim 49, further comprising means for generating a reference signal (928) based on an error signal (920) generated by the corrector function (918).

## Patentansprüche

1. Verfahren zum Synchronisieren von mehreren Prozessoren (24) innerhalb eines Rechnersystems, wobei das Rechnersystem mehrere Prozessoren (24) enthält, wobei jeder Prozessor Teil eines jeweiligen zumindest doppelt redundanten Netzes (22) ist, das Verfahren umfassend:
Empfangen in den Prozessoren (24) von mehreren Eingangstimingsignalen (902, 906) auf einer ersten Rate von zumindest einer Quelle (904, 908);
Übertragen der Eingangstimingsignale zu einem Referenzobjekt (924) in den Prozessoren (24);
Umwandeln der Eingangstimingsignale innerhalb des Referenzobjekts (924) zu einem zeitlichen Referenzsignal, das für jedes Netz (22) dasselbe ist;
Erzeugen eines Referenzsignals (928) in jedem Prozessor (24) auf Grundlage des umgewandelten Eingangssignals, wobei jedes Referenzsignal (928) in derselben zeitlichen Beziehung zum Referenzsignal (928) in jedem anderen Prozessor (24) steht;
Ausführen von mehreren Prozessen (930) in jedem Prozessor auf Grundlage von jedem jeweiligen Referenzsignal;
wobei das Rechnersystem mehrere Knotenelektronikeinheiten (20) enthält, wobei jede der mehreren Knotenelektronikeinheiten (20) kommunikationsfähig an das zumindest doppelt redundante Netz (22) gekoppelt ist,
Übertragen des Referenzsignals (928) über das zumindest doppelt redundante Netz (22) in der Form eines Transreferenzsignals (928) mit einer Sequenzzahl;
wobei die Knotenelektronikeinheiten (20) zumindest einen Taktgeber enthalten, und wobei das Verfahren ferner Folgendes umfasst: Ausführen von knotenelektronikeinheitsinternen Prozessen auf Grundlage des Taktgebers; Empfangen des Transreferenzsignals mit einer Sequenzzahl an der Knotenelektronikeinheit; und Ausführen eines Referenzierungsprozesses, wenn das Transreferenzsignal mit der Sequenzzahl empfangen wird;
wobei das Ausführen des Referenzierungsprozesses ferner Folgendes umfasst:
Bestimmen des Status des Transreferenzsignals (928) mit der Sequenzzahl auf Grundlage des Taktgebers;
Aufzeichnen einer Empfangszeit des Transreferenzsignals (928) mit der Sequenzzahl auf Grundlage des Taktgebers;
Bestimmen eines Taktgeberfehlers auf Grundlage des Transreferenzsignals (928) mit der Sequenzzahl;
Anpassen des Taktgebers auf Grundlage des bestimmten Taktgeberfehlers; und
Synchronisieren von Knotenelektronikeinheitsprozessen auf Grundlage des angepassten Taktgebers;
wobei jeder Prozessor (24) eine Korrektorfunktion (918) enthält, und wobei das Verfahren ferner das Bestimmen eines Status eines ersten Eingangssignals (902, 906) auf Grundlage des ersten Eingangssignals und jeden anderen Eingangssignals (906) umfasst;
Bestimmen eines Eingangssignalfehlers auf Grundlage des ersten Eingangssignals (902, 906) und jeden anderen Eingangssignals; und
Übertragen des Fehlersignals (920) an eine jeweilige von Quellen (904, 908), die dem Eingangssignalfehler zugehört; und
Anpassen ihres Eingangssignals auf Grundlage des übertragenen Fehlersignals.

2. Verfahren nach Anspruch 1, wobei das Empfangen von mehreren Eingangssignalen das Empfangen von mehreren Eingangssignalen (902, 906) von zumindest einer einer Quelle (908), die intern zum Prozessor (24) ist, und einer Quelle (908), die zu jeglichem anderen der mehreren Prozessoren (24) intern ist, umfasst.

3. Verfahren nach einem der Ansprüche 1 oder 2, wobei das Empfangen von mehreren Eingangssignalen (902) das Empfangen von mehreren Eingangssequenzzahlen umfasst.

4. Verfahren nach Anspruch 3, wobei das Empfangen von mehreren Eingangssequenzzahlen (902) das Empfangen von mehreren Eingangssequenzzahlen umfasst, die zumindest sechs Bit lang sind.

5. Verfahren nach Anspruch 3, wobei das Empfangen von mehreren Eingangssequenzzahlen (902) das Empfangen von mehreren Eingangssequenzzahlen umfasst, die sechzehn Bit lang sind.

6. Verfahren nach Anspruch 1, wobei das Erzeugen eines Transreferenzsignals (928) das Erzeugen eines Referenzsignals umfasst, das eine Transreferenzsequenzzahl enthält.

7. Verfahren nach Anspruch 6, wobei das Erzeugen eines Transreferenzsignals (928) das Erzeugen eines Referenzsignals umfasst, das eine Transreferenzsequenzzahl enthält, die 64 Bit lang ist.

8. Verfahren nach Anspruch 1, wobei das Ausführen eines Referenzierungsprozesses das Ausführen eines Referenzierungsprozesses unter Benutzung von zumindest einem von einem internen Taktgeber und einem externen Taktgeber umfasst.

9. Verfahren nach Anspruch 8, wobei das Ausführen eines Referenzierungsprozesses das Ausführen eines Referenzierungsprozesses auf Grundlage des Referenzsignals mit einer Sequenzzahl als der Taktgeber umfasst.

10. Verfahren nach einem der Ansprüche 1, 8 oder 9, wobei das Anpassen des Taktgebers auf Grundlage der Fehlerberechnung das Anpassen des ersten Taktgebers unter Benutzung eines Phasenregelkreises (PLL) umfasst.

11. Verfahren nach einem der Ansprüche 1, 8 oder 9, wobei das Anpassen des Taktgebers auf Grundlage der Fehlerberechnung das Einstellen des Taktgebers aus dem Referenzsignal mit einer Sequenzzahl umfasst.

12. Verfahren nach einem der vorhergehenden Ansprüche, ferner umfassend:
Bestimmen einer ersten Nichtsynchronitätsbedingung auf Grundlage des bestimmten Fehlers; und
Übertragen des ersten Nichtsynchronitätssignals an jeden Prozessor (24).

13. Verfahren nach Anspruch 12, wobei das Übertragen des ersten Nichtsynchronitätssignals an jeden Prozessor (24) das Übertragen des ersten Nichtsynchronitätssignals umfasst, das zumindest einen Zeitgeberwert aufweist.

14. Verfahren nach einem der Ansprüche 12 oder 13, ferner umfassend das Bestimmen eines Nichtsynchronitätssignals für jede Knotenelektronikeinheit (20) auf Grundlage von zumindest einem des ersten Nichtsynchronitätssignals und jedes Prozessorreferenzsignals.

15. Verfahren nach einem der vorhergehenden Ansprüche, wobei jeder Taktgeber eine Taktgebersequenzzahl enthält, und wobei das Bestimmen eines ersten Taktgeberfehlers auf Grundlage des Transreferenzsignals mit einer Sequenzzahl das Bestimmen eines ersten Taktgeberfehlers auf Grundlage des Transreferenzsignals mit einer Sequenzzahl umfasst.

16. Verfahren nach einem der vorhergehenden Ansprüche, wobei das Bestimmen eines Status eines ersten Eingangssignals (902, 906) zumindest eines von Bestimmen eines Vorhandenseins des ersten Eingangssignals innerhalb eines erwarteten Zeitfensters, Bestimmen eines Nichtvorhandenseins des ersten Eingangssignals, Bestimmen eines ungültigen ersten Eingangssignals und Bestimmen eines gestörten ersten Eingangssignals umfasst.

17. Verfahren nach Anspruch 16, wobei das Bestimmen eines Nichtvorhandenseins des ersten Eingangssignals (902, 906) das Benutzen einer Laufzeitüberwachung zum Bestimmen des Nichtvorhandenseins des ersten Eingangssignals umfasst.

18. Verfahren nach einem der vorhergehenden Ansprüche, wobei das Anpassen jedes Eingangssignals (902, 906) das Anpassen jedes Eingangssignals unter Benutzung eines Phasenregelkreises an der Eingangssignalquelle (904, 908) umfasst.

19. Verfahren nach einem der vorhergehenden Ansprüche, wobei das Anpassen jedes Eingangssignals (902, 906) das Anpassen jedes Eingangssignals durch Einstellen der Quelle (904, 908) unter Benutzung eines anderen der Eingangssignale umfasst.

20. Verfahren nach einem der vorhergehenden Ansprüche, ferner umfassend das Erzeugen eines Transreferenzsignals (928) auf Grundlage eines umgewandelten Eingangssignals (902, 906), wobei die Umwandlung nach zumindest einem von einem Auftreten eines ersten Ereignisses oder Auftreten eines Übergangs zu einem unzulänglichem Status von zumindest einem Eingangssignal modifiziert wird.

21. Verfahren nach Anspruch 20, wobei das Erzeugen eines Transreferenzsignals (928) das Austauschen jedes unzulänglichen Eingangssignals (902, 906) durch ein verfügbares Eingangssignal auf Grundlage der Präferenzreihenfolge von Eingangssignalen umfasst.

22. Verfahren nach einem der Ansprüche 20 oder 21, wobei das Erzeugen eines Transreferenzsignals (928) das Erzeugen eines Referenzsignals umfasst, wobei das erste Ereignis ein Verlust von zumindest einem Eingangssignal (902, 906) ist.

23. Verfahren nach einem der vorhergehenden Ansprüche, ferner umfassend das Erzeugen eines Transreferenzsignals (928) auf Grundlage eines umgewandelten Eingangssignals (902, 906), wobei die Umwandlung nach zumindest einem von einem Auftreten eines zweiten Ereignisses oder Auftreten eines Übergangs zu einem zufriedenstellenden Status von zumindest einem Eingangssignal modifiziert wird.

24. Verfahren nach Anspruch 23, wobei das Erzeugen eines Transreferenzsignals (928) das Austauschen eines verfügbaren Eingangssignals (902, 906) durch ein zufriedenstellendes Eingangssignal auf Grundlage der Präferenzreihenfolge von Eingangssignalen umfasst.

25. Verfahren nach einem der Ansprüche 23 oder 24, wobei das Erzeugen eines Transreferenzsignals (928) das Erzeugen eines Referenzsignals umfasst, wobei das zweite Ereignis eine Wiederherstellung von zumindest einem Eingangssignal (902, 906) ist.

26. Verfahren nach Anspruch 23, wobei das Erzeugen eines Transreferenzsignals (928) das Erzeugen eines Referenzsignals auf Grundlage eines Fehlersignals (920) umfasst, das durch die Korrektorfunktion (918) erzeugt wurde.

27. Rechnersystem mit einer Vorrichtung zum Synchronisieren von mehreren Prozessoren (24) innerhalb des Rechnersystems, wobei das Rechnersystem mehrere Prozessoren (24) enthält, wobei jeder Prozessor (24) Teil eines jeweiligen zumindest doppelt redundanten Netzes (22) ist, die Vorrichtung umfassend:
Mittel zum Empfangen von mehreren Eingangstimingsignalen (902, 906) auf einer ersten Rate von zumindest einer Quelle (904, 908);
ein Referenzobjekt (924);
Mittel zum Übertragen der Eingangstimingsignale (902, 906) zum Referenzobjekt (924); und
Mittel im Referenzobjekt (924) zum Umwandeln der Eingangstimingsignale zu einem zeitlichen Referenzsignal (928), das für jedes Netz (22) dasselbe ist;
Mittel zum Erzeugen eines Referenzsignals (928) in jedem Prozessor (24) auf Grundlage des zeitlichen Referenzsignals (928), wobei jedes Referenzsignal in derselben zeitlichen Beziehung zu einem Referenzsignal in jedem anderen Prozessor steht;
Mittel zum Ausführen von mehreren Prozessen (930) in jedem Prozessor auf Grundlage von jedem jeweiligen Referenzsignal;
wobei das Rechnersystem mehrere Knotenelektronikeinheiten (20) enthält, wobei jede der mehreren Knotenelektronikeinheiten kommunikationsfähig an das zumindest doppelt redundante Netz (22) gekoppelt ist, und wobei das System ferner Mittel zum Übertragen des Referenzsignals über das Netz in der Form eines Transreferenzsignals mit einer Sequenzzahl umfasst;
wobei jede der Knotenelektronikeinheiten (20) zumindest einen Taktgeber umfasst, und wobei das System ferner Folgendes umfasst:
Mittel zum Ausführen von knotenelektronikeinheitsinternen Prozessen auf Grundlage des Taktgebers;
Mittel zum Empfangen des Transreferenzsignals mit einer Sequenzzahl an der Knotenelektronikeinheit;
Mittel zum Ausführen eines Referenzierungsprozesses, wenn das Transreferenzsignal empfangen wird;
Mittel zum Bestimmen eines Status des Transreferenzsignals mit der Sequenzzahl auf Grundlage des Taktgebers;
Mittel zum Aufzeichnen einer Empfangszeit des Transreferenzsignals mit der Sequenzzahl auf Grundlage des Taktgebers;
Mittel zum Bestimmen eines Taktgeberfehlers auf Grundlage der Sequenzzahl;
Mittel zum Anpassen des Taktgebers auf Grundlage des bestimmten Taktgeberfehlers; und
Mittel zum Synchronisieren von Knotenelektronikeinheitsprozessen auf Grundlage des angepassten Taktgebers;
wobei jeder Prozessor eine Korrektorfunktion (918) enthält, und wobei das System ferner Mittel zum Bestimmen eines Status eines ersten Eingangssignals (902, 906) auf Grundlage des ersten Eingangssignals und jeden anderen Eingangssignals umfasst;
Mittel zum Bestimmen eines Eingangssignalfehlers auf Grundlage des ersten Eingangssignals (902, 906) und jeden anderen Eingangssignals; und
Mittel zum Übertragen eines Fehlersignals (920) an eine jeweilige von Quellen (904, 908), die dem Eingangssignalfehler zugehört; und
Mittel zum Anpassen ihres Eingangssignals auf Grundlage des übertragenen Fehlersignals.

28. System nach Anspruch 27, wobei das Mittel zum Empfangen von mehreren Eingangstimingsignalen (902, 906) Mittel zum Empfangen von mehreren Eingangssignalen (902, 906) von zumindest einer einer Quelle, die intern zum Prozessor (908) ist, und einer Quelle, die zu jeglichem anderen der mehreren Prozessoren (904) intern ist, umfasst.

29. System nach einem der Ansprüche 27 oder 28, ferner umfassend Mittel zum Empfangen von mehreren Eingangssequenzzahlen, die sich auf die Eingangstimingsignale beziehen.

30. System nach Anspruch 29, wobei das Mittel zum Empfangen von mehreren Eingangssequenzzahlen zum Empfangen von Eingangssequenzzahlen geeignet ist, die zumindest sechs Bit lang sind.

31. System nach Anspruch 29, wobei das Mittel zum Empfangen von mehreren Eingangssequenzzahlen zum Empfangen von mehreren Eingangssequenzzahlen geeignet ist, die zumindest sechzehn Bit lang sind.

32. System nach Anspruch 27, wobei das Mittel zum Erzeugen eines Referenzsignals (928) Mittel zum Erzeugen eines Referenzsignals umfasst, das eine Referenzsequenzzahl enthält.

33. System nach Anspruch 32, wobei das Mittel zum Erzeugen eines Referenzsignals (928) Mittel zum Erzeugen eines Referenzsignals umfasst, das eine Referenzsequenzzahl enthält, die 64 Bit lang ist.

34. System nach Anspruch 27, ferner umfassend Mittel zum Ausführen eines Referenzierungsprozesses unter Benutzung von zumindest einem von einem internen Taktgeber und einem externen Taktgeber.

35. System nach Anspruch 34, ferner umfassend Mittel zum Ausführen eines Referenzierungsprozesses auf Grundlage des Transreferenzsignals mit einer Sequenzzahl als der Taktgeber.

36. System nach einem der Ansprüche 27, 34 oder 35, ferner umfassend Mittel zum Anpassen des ersten Taktgebers unter Benutzung eines Phasenregelkreises (PLL).

37. System nach einem der Ansprüche 27, 34 oder 35, ferner umfassend Mittel zum Einstellen des Taktgebers aus dem Transreferenzsignal mit einer Sequenzzahl.

38. System nach einem der Ansprüche 27 bis 37, ferner umfassend:
Mittel zum Bestimmen einer ersten Nichtsynchronitätsbedingung auf Grundlage des bestimmten Fehlers; und
Mittel zum Übertragen des ersten Nichtsynchronitätssignals an jeden Prozessor (24).

39. System nach Anspruch 38, ferner umfassend Mittel zum Übertragen des ersten Nichtsynchronitätssignals, wobei das Signal zumindest einen Zeitgeberwert umfasst.

40. System nach einem der Ansprüche 38 oder 39, ferner umfassend Mittel zum Bestimmen eines Nichtsynchronitätssignals für jede Knotenelektronikeinheit (20) auf Grundlage von zumindest einem des ersten Nichtsynchronitätssignals und jedes Prozessorreferenzsignals.

41. System nach einem der Ansprüche 27 bis 40, wobei jeder Taktgeber eine Taktgebersequenzzahl enthält, und wobei das System ferner Mittel zum Bestimmen eines Taktgeberfehlers auf Grundlage des Transreferenzsignals mit einer Sequenzzahl umfasst.

42. System nach Anspruch 27, ferner umfassend zumindest ein Mittel, das aus der Gruppe ausgewählt ist, die aus folgendem besteht: Mittel zum Bestimmen eines Vorhandenseins des ersten Eingangssignals (902, 906) innerhalb eines erwarteten Zeitfensters, Mittel zum Bestimmen eines Nichtvorhandenseins des ersten Eingangssignals, Mittel zum Bestimmen eines ungültigen ersten Eingangssignals und Mittel zum Bestimmen eines gestörten ersten Eingangssignals.

43. System nach Anspruch 42, ferner umfassend Mittel zum Benutzen einer Laufzeitüberwachung zum Bestimmen des Nichtvorhandenseins des ersten Eingangssignals (902, 906).

44. System nach Anspruch 27, ferner umfassend Mittel zum Anpassen jedes Eingangssignals (902, 906) unter Benutzung eines Phasenregelkreises an der Eingangssignalquelle.

45. System nach Anspruch 27, ferner umfassend Mittel zum Anpassen jedes Eingangssignals (902, 906) durch Einstellen der Quelle unter Benutzung eines anderen der Eingangssignale.

46. System nach einem der Ansprüche 27 bis 45, ferner umfassend Mittel zum Erzeugen eines Referenzsignals (928) auf Grundlage eines umgewandelten Eingangssignals (902, 906), wobei die Umwandlung nach zumindest einem von einem Auftreten eines ersten Ereignisses oder Auftreten eines Übergangs zu einem unzulänglichem Status von zumindest einem Eingangssignal modifiziert wird.

47. System nach Anspruch 46, ferner umfassend Mittel zum Austauschen jedes unzulänglichen Eingangssignals (902, 906) durch ein verfügbares Eingangssignal auf Grundlage der Präferenzreihenfolge von Eingangssignalen.

48. System nach einem der Ansprüche 46 oder 47, wobei das erste Ereignis ein Verlust von zumindest einem Eingangssignal (902, 906) ist.

49. System nach einem der Ansprüche 27 bis 48, ferner konfiguriert zum Erzeugen eines Referenzsignals (928) auf Grundlage eines umgewandelten Eingangssignals, wobei die Umwandlung modifiziert wird, wenn zumindest eines von einem zweiten Ereignis auftritt und ein Übergang zu einem zufriedenstellenden Status von zumindest einem Eingangssignal auftritt.

50. System nach Anspruch 49, ferner umfassend Mittel zum Austauschen eines verfügbaren Eingangssignals (902, 906) durch ein zu zufriedenstellend übergegangenes Eingangssignal auf Grundlage der Präferenzreihenfolge von Eingangssignalen.

51. System nach einem der Ansprüche 49 oder 50, wobei das zweite Ereignis eine Wiederherstellung von zumindest einem Eingangssignal (902, 906) ist.

52. System nach Anspruch 49, ferner umfassend Mittel zum Erzeugen eines Referenzsignals (928) auf Grundlage eines Fehlersignals (920), das durch die Korrektorfunktion (918) erzeugt wurde.

## Revendications

1. Procédé de synchronisation d'une pluralité de processeurs (24) dans un système informatique, dans lequel le système informatique comprend une pluralité de processeurs (24), chaque processeur faisant partie d'un réseau respectif au moins doublement redondant (22), ledit procédé comprenant les étapes consistant à :
recevoir dans les processeurs (24) une pluralité de signaux de synchronisation d'entrée (902, 906) à un premier débit en provenance d'au moins une source (904, 908) ;
transmettre les signaux de synchronisation d'entrée à un objet de référence (924) dans les processeurs (24) ;
transformer les signaux de synchronisation d'entrée dans ledit objet de référence (924) en un signal de référence temporel qui est le même pour chaque réseau (22) ;
générer un signal de référence (928) dans chaque processeur (24) sur la base du signal d'entrée transformé, dans lequel chaque signal de référence (928) se trouve dans la même relation temporelle avec le signal de référence (928) dans chaque autre processeur (24) ;
exécuter une pluralité de processus (930) dans chaque processeur sur la base de chaque signal de référence respectif ;
dans lequel le système informatique comprend une pluralité d'unités électroniques nodales (20), chacune de la pluralité d'unités électroniques nodales (20) étant couplée en communication avec le réseau au moins doublement redondant (22), transmettre le signal de référence (928) via le réseau au moins doublement redondant (22) sous la forme d'un signal de transréférence (928) avec un numéro de séquence ;
dans lequel les unités électroniques nodales (20) comprennent au moins une horloge et dans lequel le procédé comprend en outre l'exécution de processus internes aux unités électroniques nodales sur la base de l'horloge ; la réception du signal de référence avec un numéro de séquence à l'unité électronique nodale ; et l'exécution d'un procédé de référencement lorsque le signal de transréférence avec le numéro de séquence est reçu ;
dans lequel l'exécution du procédé de référencement comprend en outre :
la détermination de l'état du signal de transréférence (928) avec le numéro de séquence sur la base de l'horloge ;
l'enregistrement d'un temps de réception du signal de transréférence (928) avec le numéro de séquence sur la base de l'horloge ;
la détermination d'une erreur d'horloge sur la base du signal de transréférence (928) avec le numéro de séquence ;
l'ajustement de l'horloge sur la base de l'erreur d'horloge déterminée ; et
la synchronisation de processus des unités électroniques nodales sur la base de l'horloge ajustée ;
dans lequel chaque processeur (24) comprend une fonction de correcteur (918) et dans lequel le procédé comprend en outre la détermination d'un état d'un premier signal d'entrée sur la base du premier signal d'entrée et de chaque autre signal d'entrée (906) ;
la détermination d'une erreur de signal d'entrée sur la base du premier signal d'entrée (902, 906) et de chaque autre signal d'entrée et
la transmission du signal d'erreur (920) à l'une respective de sources (904, 908) qui est associée à l'erreur de signal d'entrée ; et
l'ajustement de son signal d'entrée sur la base du signal d'erreur transmis.

2. Procédé selon la revendication 1, dans lequel ladite réception d'une pluralité de signaux d'entrée comprend la réception d'une pluralité de signaux d'entrée (902, 906) provenant d'au moins l'une d'une source (908) interne au processeur (24) et d'une source (908) interne à un autre quelconque de la pluralité de processeurs (24).

3. Procédé selon la revendication 1 ou 2, dans lequel ladite réception d'une pluralité de signaux d'entrée (902) comprend la réception d'une pluralité de numéros de séquences d'entrée.

4. Procédé selon la revendication 3, dans lequel ladite réception d'une pluralité de numéros de séquences d'entrée (902) comprend la réception d'une pluralité de numéros de séquences d'entrée d'une longueur d'au moins six bits.

5. Procédé selon la revendication 3, dans lequel ladite réception d'une pluralité de numéros de séquences d'entrée (902) comprend la réception d'une pluralité de numéros de séquences d'entrée d'une longueur de seize bits.

6. Procédé selon la revendication 1, dans lequel ladite génération d'un signal de transréférence (928) comprend la génération d'un signal de référence qui comprend un numéro de séquence de transréférence.

7. Procédé selon la revendication 6, dans lequel ladite génération d'un signal de transréférence (928) comprend la génération d'un signal de référence qui comprend un numéro de séquence de transréférence d'une longueur de soixante quatre bits.

8. Procédé selon la revendication 1, dans lequel l'exécution d'un processus de référencement comprend l'exécution d'un processus de référencement en utilisant au moins l'une d'une horloge interne et d'une horloge externe.

9. Procédé selon la revendication 8, dans lequel l'exécution d'un processus de référencement comprend l'exécution d'un processus de référencement sur la base du signal de référence avec un numéro de séquence comme l'horloge.

10. Procédé selon la revendication 1, 8 ou 9, dans lequel l'ajustement de l'horloge sur la base du calcul d'erreur comprend l'ajustement de la première horloge en utilisant une boucle à verrouillage de phase (PLL).

11. Procédé selon la revendication 1, 8 ou 9, dans lequel l'ajustement de l'horloge sur la base du calcul d'erreur comprend le réglage de l'horloge à partir du signal de référence avec un numéro de séquence.

12. Procédé selon l'une quelconque des revendications précédentes, comprenant en outre :
la détermination d'un premier état hors synchronisation sur la base d'une erreur déterminée ;
et la transmission du premier signal hors synchronisation à chaque processeur (24).

13. Procédé selon la revendication 12, dans lequel la transmission du premier signal hors synchronisation à chaque processeur (24) comprend la transmission du premier signal hors synchronisation qui comprend au moins une valeur d'horloge.

14. Procédé selon la revendication 12 ou 13, comprenant en outre la détermination d'un signal hors synchronisation pour chaque unité électronique nodale (20) sur la base d'au moins l'un du premier signal hors synchronisation et de chaque signal de référence de processeur.

15. Procédé selon l'une quelconque des revendications précédentes, dans lequel chaque horloge comprend un numéro de séquence d'horloge et dans lequel la détermination d'une première erreur d'horloge sur la base du signal de transréférence avec un numéro de séquence comprend la détermination d'une première erreur d'horloge sur la base du signal de transréférence avec un numéro de séquence.

16. Procédé selon l'une quelconque des revendications précédentes, dans lequel la détermination d'un état d'un premier signal d'entrée (902, 906) comprend au moins l'une de la détermination d'une présence du premier signal d'entrée dans une fenêtre temporelle attendue, de la détermination d'une absence du premier signal d'entrée, de la détermination d'un premier signal d'entrée invalide et de la détermination d'un premier signal d'entrée bruyant.

17. Procédé selon la revendication 16, dans lequel la détermination d'une absence du premier signal d'entrée (902, 906) comprend l'utilisation d'un rythmeur de séquence pour déterminer l'absence du premier signal d'entrée.

18. Procédé selon l'une quelconque des revendications précédentes, dans lequel l'ajustement de chaque signal d'entrée (902, 906) comprend l'ajustement de chaque signal d'entrée en utilisant une boucle à verrouillage de phase au niveau de la source de signal d'entrée (904, 908).

19. Procédé selon l'une quelconque des revendications précédentes, dans lequel l'ajustement de chaque signal d'entrée (902, 906) comprend l'ajustement de chaque signal d'entrée en réglant la source (904, 908) en utilisant un autre des signaux d'entrée.

20. Procédé selon l'une quelconque des revendications précédentes, comprenant en outre la génération d'un signal de transréférence (928) sur la base d'un signal d'entrée transformé (902, 906), dans lequel la transformation est modifiée lors d'au moins l'une de l'occurrence d'un premier événement et de l'occurrence d'une transition à un état insatisfaisant d'au moins un signal d'entrée.

21. Procédé selon la revendication 20, dans lequel la génération d'un signal de transréférence (928) comprend le remplacement de chaque signal d'entrée insatisfaisant (902, 906) par un signal d'entrée disponible sur la base de l'ordre de préférence des signaux d'entrée.

22. Procédé selon la revendication 20 ou 21, dans lequel la génération d'un signal de transréférence (928) comprend la génération d'un signal de référence, dans lequel le premier événement est une perte d'au moins un signal d'entrée (902, 906).

23. Procédé selon l'une quelconque des revendications précédentes, comprenant en outre la génération d'un signal de transréférence (928) sur la base d'un signal d'entrée transformé (902, 906), dans lequel la transformation est modifiée lors d'au moins l'une de l'occurrence d'un second événement et de l'occurrence d'une transition à un état satisfaisant d'au moins un signal d'entrée.

24. Procédé selon la revendication 23, dans lequel la génération d'un signal de transréférence (928) comprend le remplacement d'un signal d'entrée disponible (902, 906) par un signal d'entrée satisfaisant sur la base de l'ordre de préférence des signaux d'entrée.

25. Procédé selon la revendication 23 ou 24, dans lequel la génération d'un signal de transréférence (928) comprend la génération d'un signal de référence, dans lequel le second événement est une restauration d'au moins un signal d'entrée (902, 906).

26. Procédé selon la revendication 23, dans lequel la génération d'un signal de transréférence (928) comprend la génération d'un signal de référence sur la base d'un signal d'erreur (920) généré par la fonction de correcteur (918).

27. Système informatique comprenant un appareil pour synchroniser une pluralité de processeurs (24) dans le système informatique, ledit système informatique comprenant une pluralité de processeurs (24), chaque dit processeur (24) étant couplé en communication avec un réseau respectif au moins doublement redondant (22), ledit appareil comprenant :
des moyens pour recevoir une pluralité de signaux de synchronisation d'entrée (902, 906) à un premier débit depuis au moins une source (904, 908) ;
un objet de référence (924) ;
des moyens pour transmettre les signaux de synchronisation d'entrée (902, 906) à l'objet de référence (924) ; et
des moyens dans l'objet de référence (924) pour transformer les signaux de synchronisation d'entrée en un signal de référence temporel (928) qui est le même pour chaque réseau (22) ;
des moyens pour générer un signal de référence (928) dans chaque processeur (24) sur la base du signal de référence temporel (928), dans lequel chaque signal de référence se trouve dans la même relation temporelle avec un signal de référence de chaque autre processeur ; et
des moyens pour exécuter une pluralité de processus (930) dans chaque processeur sur la base de chaque signal de référence respectif ;
dans lequel ledit système informatique comprend en outre une pluralité d'unités électroniques nodales (20), chacune de ladite pluralité d'unités électroniques nodales étant couplée en communication avec le réseau au moins doublement redondant (22) et dans lequel le système comprend en outre des moyens pour transmettre le signal de référence sur le réseau sous la forme d'un signal de transréférence avec un numéro de séquence ;
dans lequel chaque dite unité électronique nodale (20) comprend au moins une horloge et dans lequel ledit système comprend en outre :
des moyens pour exécuter des processus internes aux unités électroniques nodales sur la base de l'horloge ;
des moyens pour recevoir le signal de transréférence avec un numéro de séquence dans l'unité électronique nodale ;
des moyens pour exécuter un processus de référencement lorsque le signal de transréférence est reçu ;
des moyens pour déterminer un état du signal de transréférence avec le numéro de séquence sur la base de l'horloge ;
des moyens pour enregistrer un temps de réception du signal de transréférence avec le numéro de séquence sur la base de l'horloge ;
des moyens pour déterminer une erreur d'horloge sur la base du numéro de séquence ;
des moyens pour ajuster l'horloge sur la base de l'horloge d'erreur déterminée ; et
des moyens pour synchroniser les processus d'unités électroniques nodales sur la base de l'horloge ajustée ;
dans lequel chaque processeur comprend une fonction de correcteur (918) et dans lequel ledit système comprend en outre des moyens pour déterminer un état d'un premier signal d'entrée (902, 906) sur la base du premier signal d'entrée et de chaque autre signal d'entrée ;
des moyens pour déterminer une erreur de signal d'entrée sur la base du premier signal d'entrée (902, 906) et de chaque autre signal d'entrée et des moyens pour transmettre un signal d'erreur (920) à l'une respective de sources (904, 908) qui est associée à l'erreur de signal d'entrée ; et
des moyens pour ajuster son signal d'entrée sur la base du signal d'erreur transmis.

28. Système selon la revendication 27, dans lequel les moyens de réception d'une pluralité de signaux de synchronisation d'entrée (902, 906) comprennent des moyens pour recevoir des signaux de synchronisation d'entrée (902, 906) provenant d'au moins l'une d'une source interne audit processeur (908) et d'une source interne à un autre quelconque de ladite pluralité de processeurs (904).

29. Système selon la revendication 27 ou 28, comprenant en outre des moyens pour recevoir une pluralité de numéros de séquences d'entrée rapportés aux signaux de synchronisation d'entrée.

30. Système selon la revendication 29, dans lequel les moyens pour recevoir une pluralité de numéros de séquences d'entrée sont à même de recevoir des numéros de séquences d'une longueur d'au moins six bits.

31. Système selon la revendication 29, dans lequel les moyens pour recevoir une pluralité de numéros de séquences d'entrée sont à même de recevoir des numéros de séquences d'une longueur d'au moins seize bits.

32. Système selon la revendication 27, dans lequel les moyens pour générer un signal de référence (928) comprennent des moyens pour générer un signal de référence qui comprend un numéro de séquence de référence.

33. Système selon la revendication 32, dans lequel les moyens de génération d'un signal de référence (928) comprennent des moyens pour générer un signal de référence qui comprend un numéro de séquence de référence d'une longueur de soixante quatre bits.

34. Système selon la revendication 27, comprenant en outre des moyens pour exécuter un processus de référencement en utilisant au moins l'une d'une horloge interne et d'une horloge externe.

35. Système selon la revendication 34, comprenant en outre des moyens pour exécuter un processus de référencement sur la base du signal de transréférence avec un numéro de séquence comme l'horloge.

36. Système selon la revendication 27, 34 ou 35, comprenant en outre des moyens pour ajuster la première horloge en utilisant une boucle à verrouillage de phase (PLL).

37. Système selon la revendication 27, 34 ou 35, comprenant en outre des moyens pour régler l'horloge à partir du signal de transréférence avec un numéro de séquence.

38. Système selon l'une quelconque des revendications 27 à 37, comprenant en outre :
des moyens de détermination d'un premier état hors synchronisation sur la base de l'erreur déterminée ; et
des moyens de transmission du premier signal hors synchronisation à chaque processeur (24).

39. Système selon la revendication 38, comprenant en outre des moyens de transmission du premier signal hors synchronisation, dans lequel le signal comprend au moins une valeur d'horloge.

40. Système selon la revendication 38 ou 39, comprenant en ou outre des moyens pour déterminer un signal hors synchronisation pour chaque unité électronique nodale (20) sur la base d'au moins l'un du premier signal hors synchronisation et de chaque signal de référence de processeur.

41. Système selon l'une quelconque des revendications 27 à 40, dans lequel l'horloge comprend un numéro de séquence d'horloge et dans lequel ledit système comprend en outre des moyens pour déterminer une erreur d'horloge sur la base du signal de transréférence avec un numéro de séquence.

42. Système selon la revendication 27, comprenant en outre au moins l'un choisi dans les groupes constitués de moyens de détermination d'une présence du premier signal d'entrée (902, 906) dans un fenêtre temporelle attendue, de moyens de détermination d'une absence du premier signal d'entrée, de moyens de détermination d'un premier signal d'entrée invalide et de moyens de détermination d'un premier signal d'entrée bruyant.

43. Système selon la revendication 42, comprenant en outre des moyens pour utiliser un rythmeur de séquence afin de déterminer l'absence du premier signal d'entrée (902, 906).

44. Système selon la revendication 27, comprenant en outre des moyens pour ajuster chaque signal d'entrée (902, 906) en utilisant une boucle à verrouillage de phase à la source de signal d'entrée.

45. Système selon la revendication 27, comprenant en outre des moyens pour ajuster chaque signal d'entrée (902, 906) en réglant la source en utilisant un autre des signaux d'entrée.

46. Système selon l'une quelconque des revendications 27 à 45, comprenant en outre des moyens pour générer un signal de référence (928) sur la base d'un signal d'entrée transformé (902, 906), dans lequel la transformation est modifiée lors d'au moins l'une de l'occurrence d'un premier événement et de l'occurrence d'une transition à un état insatisfaisant d'au moins un signal d'entrée.

47. Système selon la revendication 46, comprenant en outre des moyens pour remplacer chaque signal d'entrée insatisfaisant (902, 906) par un signal d'entrée disponible sur la base de l'ordre de préférence des signaux d'entrée.

48. Système selon la revendication 46 ou 47, dans lequel le premier événement est une perte d'au moins un signal d'entrée (902, 906).

49. Système selon l'une quelconque des revendications 27 à 48, configuré en outre pour générer un signal de référence (928) sur la base d'un signal d'entrée transformé, dans lequel la transformation est modifiée lorsqu'il se produit au moins l'un(e) d'un second événement et d'une transition à un état satisfaisant d'au moins un signal d'entrée.

50. Système selon la revendication 49, comprenant en outre des moyens pour remplacer un signal d'entrée disponible (902, 906) par un signal d'entrée passé à un signal d'entrée satisfaisant sur la base de l'ordre de préférence des signaux d'entrée.

51. Système selon la revendication 49 ou 50, dans lequel le second événement est une restauration d'au moins un signal d'entrée (902, 906).

52. Système selon la revendication 49, comprenant en outre des moyens pour générer un signal de référence (928) sur la base d'un signal d'erreur (920) généré par la fonction de correcteur (918).
